(19) Europäisches Patentamt
European Patent Office
Office européen des brevets

(11) Numéro de publication : **0 064 429 B2**

(12) **NOUVEAU FASCICULE DE BREVET EUROPEEN**

(45) Date de publication du nouveau fascicule du brevet : **11.12.91 Bulletin 91/50**

(51) Int. Cl.$^5$ : **B01J 37/20, C10G 49/04**

(21) Numéro de dépôt : **82400597.9**

(22) Date de dépôt : **31.03.82**

(54) Procédé d'hydrotraitement d'une charge hydrocarbonée en présence d'un catalyseur soumis à une présulfuration.

(30) Priorité : 09.04.81 FR 8107327

(43) Date de publication de la demande :
10.11.82 Bulletin 82/45

(45) Mention de la délivrance du brevet :
19.06.85 Bulletin 85/25

(45) Mention de la décision concernant l'opposition :
11.12.91 Bulletin 91/50

(84) Etats contractants désignés :
BE DE GB IT NL

(56) Documents cités :
DE-B- 1 260 443
FR-A- 2 364 689
GB-A- 1 309 457
GB-A- 1 324 034
GB-A- 1 324 034
GB-A- 1 518 914

(56) Documents cités :
US-A- 3 016 347
US-A- 3 915 894
US-A- 4 176 087
Technical Information HDS 79/67
Technical Information HDS l)/97, AKZO CHE-
MIE, 1979 pages 1-6

(73) Titulaire : INSTITUT FRANCAIS DU PETROLE
4, Avenue de Bois-Préau
F-92502 Rueil-Malmaison (FR)

(72) Inventeur : Jacquin, Yves
36, rue des Fontaines
F-92310 Sèvres (FR)
Inventeur : Franck, Jean-Pierre
24, Avenue Ivan Tourqueneff
F-78380 Bougival (FR)
Inventeur : Goubin, Gilbert
7, Impasse des Charentais
F-95100 Argenteuil (FR)
Inventeur : Eichenberger, André
15, rue Claude Cernay
F-78870 Bailly (FR)

EP 0 064 429 B2

## Description

Les catalyseurs d'hydrotraitement à base de cobalt et-ou molybdène sont largement utilisés dans l'industrie du raffinage. Ces catalyseurs sont commercialisés et chargés dans les réacteurs sous forme d'oxydes alors que leur forme activée et stable sulfurée. La procédure de mise en marche des unités qui les utilisent comporte une phase de présulfuration. Cette opération bien connue de l'homme de l'art peut être réalisée en utilisant au choix, par exemple, comme agen de sulfuration, un mélange hydrogène-hydrogène sulfuré, une molécule sulfurée telle que le sulfure de carbone, des mercaptans ou des disulfures ou même les composés sulfurés contenus dans la charge elle-même.

On a maintenant découvert que d'une manière surprenante, l'activité et la stabilité des catalyseurs nickel-molybdène, nickel-tungstène, colbat-molybdène et cobalt-tungstène dépendent étroitement de la nature du composé utilisé pour la sulfuration et de la procédure utilisée pour effectuer cette dite sulfuration.

Par activité, on entend la performance du catalyseur durant les premières heures de son fonctionnement en présence de la charge à traiter dans les conditions de fonctionnement de l'installation qui l'utilise.

Par stabilité, on entend l'évolution de l'activité du catalyseur au cours du temps.

Par charge, on désigne la fraction d'hydrocarbures qui est normalement envoyée dans le réacteur catalytique pour y être transformée. Ainsi, on a constaté que l'activité du catalyseur pour l'hydrodésulfuration était particulièrement améliorée par une sulfuration préable des catalyseurs Co-Mo, Co-W, Ni-Mo et Ni-W suivant une méthode conforme à l'invention.

On a constaté que les résultats les plus satisfaisants quant à l'activité et la stabilité des catalyseurs nommés ci-dessus sont obtenus en procédant à une sulfuration en présence d'une charge hydrocarbonée, dite de sulfuration, contenant au moins une fraction aromatique et au moins un composé sulfuré. Les composés sulfurés sont ceux ajoutés dans la charge hydrocarbonée, dite charge de sulfuration, à ceux éventuellement présents naturellement. Les composés sulfurés ainsi présents sont en particulier, le sulfure de carbone, les mercaptans, les composés thiophéniques, les sulfures et les disulfures, composés considérés purs ou en mélange comme par exemple la fraction riche en mercaptans et sulfures extraite au cours de l'adoucissement des essences par un procédé du type Merox et/ou Merox extractif ou des mélanges des composés précédents. Le diméthyldisulfure donne des résultats particulièrement intéressants.

On a constaté que les meilleurs résultats sont obtenus lorsque la sulfuration est réalisée dans des conditions telles que, pour la ou les étapes se déroulant au-dessus de 250°C environ, et également donc au-dessus de 300°C, pendant une fraction au moins du temps de l'opération, la charge dite de sulfuration soit au moins partiellement à l'état liquide sur le catalyseur et ruisselle sur ce catalyseur dans les conditions de la sulfuration.

La ladite charge de sulfuration contient impérativement une proportion pondérale d'hydrocarbures aromatiques ou de composés aromatiques d'au moins 5% et de préférence comprise entre 5 et 20% et impérativement ne doit contenir ni composés dioléfiniques ni composés oléfiniques.

D'une façon générale, la méthode de sulfuration selon l'invention consiste à opérer comme il suit: le ou les catalyseurs étant disposés dans le réacteur, (dans lequel s'effectuera ultérieurement la réaction d'hydrodésulfuration sous forme, par exemple d'un lit fixe ou de plusieurs lits de différents catalyseurs), on injecte dans le réacteur, la charge de sulfuration définie ci-dessus (mélange charge hydrocarbonée et composé sulfuré à une température initiale T sensiblement comprise entre la température ordinaire (20°C) et 180°C et on élève progressivement la température d'entrée du réacteur à une température choisie supérieure 250°C, mais inférieure à 300°C (ou mieux 290°C) et l'on maintient alors, dans un premier stade, la température dans cet intervalle 250-300°C (ou 250-290°C) pendant un temps suffisant pour injecter pour injecter dans l'unité une quantité de soufre comprise entre 0,2 et 2 fois la quantité de soufre correspondant à la transformation complète des oxydes que renferme le catalyseur en sulfures (2,2 à 2 fois la valeur QS/R). Une méthode consisterait par exemple à choisir une température égale à T' au moins égale à la température que l'on adoptera ensuite pour réaliser la réaction d'hydrodésulfuration (et par exemple voisine de 280°C environ) et à maintenir cette température T' sensiblement constante (palier de température) jusqu'à la fin de l'injection de la quantité nécessaire de soufre.

Ce premier stade étant effectué, on élève alors progressivement la température d'entrée du réacteur à une température T" comprise entre 300 et 340°C et supérieure d'au moins 30 à 50°C à la température T' précédemment utilisée et on maintient dans un deuxième palier la température dans le nouvel intervalle ainsi défini pendant par exemple au moins deux heurs, en poursuivant l'injection dans le réacteur de la charge dite de sulfuration c'est-à-dire du mélange charge hydrocarbonée—composé sulfuré de façon à ce que, la quantité de soufre injectée à ce stade soit comprise entre 0,1 et 3 fois la valeur QS/R.

Ensuite, on élève à nouveau la température de 20 à 40°C par rapport à la température du deuxième palier et on maintient ce troisième palier à une température T"' pendant encore au moins trois heures de façon à injecter pendant ce troisième palier une quantité de sufre comprise entre 0,1 à 3 fois la valeur QS/R.

D'une manière préférée, une partie de ladite charge de sulfuration est envoyée sur le lit de catalyseur (lit

2

généralement fixe) à une température comprise entre environ 20 et 180°C. Puis on augmente progressivement la température d'introduction de la charge en procédant à des paliers de température ainsi que l'on expliquera ci-dessous plus en détails.

Lors de la sulfuration, le catalyseur dans lequel les métaux sont à l'état d'oxydes, se sulfure. La quantité de soufre fixée varie d'un catalyseur à l'autre suivant sa procédure de fabrication et la quantité et la teneur en oxydes déposés sur le support. Il est possible, à partir de la composition pondérale d'un catalyseur de calculer la quantité de soufre qui, au maximum, sera fixée par ce catalyseur. "La quantité de soufre stoechiométrique" pouvant être fixée par un catalyseur d'hydroraffinage sera par définition la quantité de soufre nécessaire pour la sulfuration complète du molybdène sous forme de $MoS_2$, du cobalt sous forme de $CO_9O_8$, du nickel sous forme de NiS et du tungstène sous forme de $WS_2$. Cette valeur est exprimée en kg de soufre par kg de catalyseur dans lequel les métaux sont sous forme oxyde.

La "quantité de soufre nécessaire pour la sulfuration du catalyseur contenu dans le réacteur" est désignée par la valeur QS/R. Elle est obtenue en multipliant la quantité de catalyseur du réacteur par la quantité de soufre stoéchiométrique relative au catalyseur.

La méthode de sulfuration conforme à la présente invention est réalisée par injection dans le réacteur de la charge dite de sulfuration. La quantité d'agent sulfurant ajoutée à la charge est calculée de manière a ce que, après vaporisation de la fraction de la charge susceptible de se vaporiser et dilution par le gaz circulant dans l'unité, la teneur en soufre issu des agents de sulfuration ajoutés et supposés complètement transformés en hydrogène sulfuré, soit comprise entre 0,1 et 10% volume du gaz. D'une manière préférée cette quantité sera telle que la teneur en hydrogène sulfuré décrite plus haut soit comprise entre 0,5 et 1,5%.

La "charge de sulfuration" est introduite dans l'unité dès que celle-ci est à une température suffisante pour que la dite charge puisse y circuler sous forme liquide. A titre indicatif, pour la plupart des charges, cette température est comprise entre environ 20 et 180°C.

Le débit de la charge de sulfuration introduite dans la réacteur est calculé par rapport au volume du catalyseur chargé dans le réacteur. Le débit de liquide exprimé en volume par,heure est comprise entre 0,25 et 10 fois le volume de catalyseur. La valeur la plus courante est comprise entre le quart et le double du volume de liquide introduit dans le réacteur dans les conditions de marches normales.

Entre les paliers, on augmente la température par les moyens connus de l'homme de l'art à un rythme compatible avec la bonne tenue mécanique et l'élimination des contraintes engendrées par la dilatation es différentes parties de l'installation. A titre indicatif, la température est généralement élevée à un rythme de 10 à 25°C par heure.

Quand l'entrée du réacteur catalytique a atteint 250°C environ, on commence à comptabiliser la quantité de soufre injectée dans le réacteur. La teneur en soufre qui est prise en considération pour ce calcul correspond à l'analyse du soufre total contenu dans la charge de sulfuration. Dans le cadre de l'invention, la quantité de soufre introduite entre la température de 250°C et la fin de la période de sulfuration correspond à une valeur comprise entre 0,5 à 10 fois la valeur QS/R définie précédemment. Par fin de la sulfuration, on entend le moment où l'installation fonctionne aux conditions normales habituelles pour procéder à la transformation attendue de la charge, c'est-à-dire ici à une hydrodésulfuration et/ou une élimination des composés hétéro atomiques N-O et/ou une hydrogénation.

La portée de l'invention n'est pas limitée à un programme particulier de montée en température toutefois, dans l forme préférée de l'invention, lorsque la température de la charge de sulfuration à l'entrée du réacteur atteint 280°C environ, (température T'), on maintient cette température pendant une période telle que l'on injecte dans l'unité 0,2 à 2 fois QS/R. Puis on augmente la température jusqu'à 320°C environ (T") et on injecte à cette température, mesurée à l'entrée du réacteur, une quantité de charge telle que la quantité de soufre injectée à 320°C soit égale à 0,1 à 3 fois QS/R; on réalise un troisième palier en montant la température à 350°C environ par exemple, et lorsque l'on atteint cette température (T") à l'entrée du réacteur, on la maintient comme précédemment et l'on injecte à cette température une quantité de soufre égale à 0.1 à 3 fois QS/R. La durée du palier à 350°C est avantageusement d'au moins 3 heures.

Ensuite, après les paliers effectués, on peut arrêter l'addition d'agent de sulfuration et amener progressivement l'unité dans les conditions de fonctionnement (température, débit, nature de la charge à hydrotraiter) connues de l'homme de l'art.

Si la température normale, exigée pour la désulfuration, est inférieure à 350°C, on diminuera en conséquence la température, pour obtenir le fonctionnement normal de l'installation.

La sulfuration des catalyseurs suivant la méthode de l'invention se traduit par une amélioration de la performance des catalyseurs notamment pour les réactions d'hydrogénation des composés aromatiques ou des composés oléfiniques et également pour l'hydrodésulfuration et l'hydrogénolyse des composés azotés et oxygénés. L'amélioration observée porte sur l'augmentation, toutes choses égales par ailleurs, de la performance (% converti) et de la stabilité de cette performance au cours de la durée de fonctionnement.

La performance en HDS est définie par exemple, par X = So - S/So (So: teneur en soufre à l'entrée; S: teneur en soufre dans le liquide en sortie d'unité).

Lorsque l'on se propose d'hydrotraiter une charge au moyen d'un catalyseur qui a été sulfuré conformément à la présente invention, en vue d'hydrogéner les composés aromatiques de cette charge et/ ou d'abaisser la teneur en soufre ou en composés sulfurés de cette charge, il est parfois avantageux, (à condition toutefois que cette charge à traiter ne renferme ni composés dioléfiniques, ni composés oléfiniques, car dans l'installation, en raison d'une vaporisation partielle de la charge, les traces d'oléfines ou de dioléfines provoqueraient des réactions parasites (polymérisation) qui à la longue seront néfastes pour l'installation) d'utiliser la charge à traiter comme charge de sulfuration en lui incorporant éventuellement au moins un composé sulfurant. L'hydrogène nécessaire à l'hydrotraitement peut éventuellement être introduit en même temps que la charge à un débit et dans les conditions de pression qui sont utilisées dans la marche normale de l'installation (hydrotraitement). Généralement pour l'installation, le débit d'hydrogène exprimé en litres par litre de charge est compris entre 10 et 2000 litres par litre. La pression totale dans l'unité est comprise entre 3 et 200 bars.

On notera qu'en ce qui concerne le procédé d'hydrotraitement d'une charge dont on désire à la fois abaisser la teneur en soufre et hydrogéner les composés aromatiques, la procédure de sulfuration conforme à la présente invention, permet d'améliorer l'activité du catalyseur dans l'hydrogénation des aromatiques, cette conjonction d'améliorations se traduisant en outre par un facteur favorable supplémentaire qui est l'élimination plus facile des composés azotés et oxygénés que peut contenir la charge à hydrotraiter.

Les exemples suivants sont indiqués à titre d'illustration de l'invention.

Exemple 1

On prépare une série de catalyseurs à base de molybdène et de tungstène associés à du cobalt et du nickel.

Sur une alumine de transition de type γ ayant 200 m²/g de surface et un volume poreux de 67 cm³/100 g de volume poreux, on dépose par imprégnation, dite à sec, un oxyde de molybdène ou de tungstène, on sèche et on calcine à 300°C puis on dépose de la même manière le sel de nickel et/ou de cobalt. Les produits obtenus sont séchés et calcinés pendant 1 heure à 500°C dans un courant d'air. Ce sont les catalyseurs A, B, C, D du tableau I qui indique les teneurs en métaux de ces catalyseurs.

Sur un support de type silice alumine à acidité moyenne contenant 25% de silice et 75% d'alumine principalement ayant une surface de 250 m²/g et un volume poreux de 75 cm³/100 g, on dépose par imprégnation, dite à sec, un oxyde de molybdène, on sèche à 250°C puis on dépose de la même manière un sel de nickel. Le produit obtenu est séché et calciné pendant 1 heure à 500°C dans un courant d'air. C'est le catalyseur E du tableau I.

Sur un support d'alumine de type γ de surface 350 m²/g ayant un volume poreux de 60 cm³/100 g, on réalise une imprégnation à sec correspondant au dépôt de 3% d'oxyde de nickel. On sèche et on calcine 1 heure à 850°C. Le produit obtenu a une surface de 160 m²/g et un volume poreux de 57 cm³/100 g.

On réalise alors suivant les techniques déjà décrites pour les catalyseurs A à E, un catalyseur dont l'analyse est indiquée dans le tableau I, c'est le catalyseur F.

EP 0 064 429 B2

TABLEAU I

| DESIGNATION | COMPOSITION | | | | | | Quantité de soufre stoechio-métrique en kg/kg |
|---|---|---|---|---|---|---|---|
| | NiO % poids | CoO % poids | MoO$_3$ % poids | WO$_3$ % poids | Al$_2$O$_3$ % poids | SiO$_2$ % poids | |
| A | 3 | | 14 | | 83 | n-s | 0,075 |
| B | 3 | | | 24 | 73 | n-s | 0,079 |
| C | 2,5 | 0,5 | 14 | | 83 | n-s | 0,074 |
| D | | 3 | 14 | | 83 | n-s | 0,074 |
| E | 8 | | 16 | | 57 | 19 | 0,105 |
| F | 6 | | 6 | | 88 | n-s | 0,052 |

n-s = teneur non significative par exemple inférieure à 3% poids.

## Exemple 2 (comparatif)

On se propose d'hydrogéner les hydrocarbures aromatiques d'une coupe hydrocarbonée.

Dans cet exemple, on commence par présulfurer le catalyseur par paliers, conformément à la présente invention. Toutefois, au lieu d'utiliser une charge de sulfuration à base d'une coupe hydrocarbonée, on utilise comme agent de sulfuration un mélange d'hydrogène sulfuré et d'hydrogène.

On opére successivement en présence des catalyseurs A, B, C, D et E. On dispose 50 cm$^3$ de catalyseur dans un réacteur et on injecte dans le réacteur, à la pression que l'on adoptera (60 bars) pour la réaction proprement dite d'hydrogénation des composés aromatiques, un débit de 27,5 1/h d'un mélange à 3% volume d'hydrogène sulfuré dans de l'hydrogène. Les conditions opératoires de sulfuration sont indiquées dans le tableau II ci-après.

TABLEAU II

Pression totale : 60 bars

Débit : 27,5 litres par heure (mesuré dans les conditions TPN)

Injection initiale du mélange H$_2$ + H$_2$S à 20°C (température ambiante)

Montée de température : 25°C/heure

Durée du palier à 280°C : 1 heure;  (quantité de soufre engagé : 1,1g
à l'issue de ce palier)

Durée du palier à 320°C : 2 heures; quantité de soufre engagé : 2,2g

Durée du palier à 350°C : 3 heures; quantité de soufre engagé : 3,3g

Duree des montées de température

entre 250°C                    : 4 heures; quantité de soufre engagé : 4,4g

Quantité totale de soufre engagé :                    11 g

Après cette présulfuration, on procéde à la réaction d'hydrogénation des composés aromatiques sur une charge contenant:

5

– toluène: 20% poids

– cyclohexane: 79,5% poids

– thiophène: 0,5% poids

Les conditions d'essais sont les suivantes:

– température: 350°C

– P = 60 bars

– débit d'hydrogène: 350 l/litre de charge

– VVH = 2 (100 cm³ par heure de charge liquide pour 50 cm³ de catalyseur).

(La charge est injectée dans le réacteur à 250°C puis la température est ensuite ajustée à 350°C). Après 3 heures de fonctionnement à 350°C, on purge l'unité et on commence des prélèvements réguliers à fin d'analyse.

Le résultat de l'essai est exprimé par la conversion du toluène définie ainsi:

$$x\ \text{toluène} = 1 - \frac{\%\ \text{toluène sortie unité}}{\%\ \text{toluène entrée unité}}$$

Les analyses de la charge et du produit sont réalisées par chromatographie en phase gazeuse.

On obtient les résultats suivants portés dans le tableau III.

TABLEAU III

| CATALYSEURS | | CONVERSION DU TOLUENE EN % APRES UN FONCTIONNEMENT CONTINU DURANT: | | | | | | QUANTITE DE SOUFRE INJECTE DURANT LA SULFURATION |
|---|---|---|---|---|---|---|---|---|
| NATURE | QS/R | 3h | 6h | 12h | 24h | 48h | 72h | |
| A (NiMo/Al$_2$O$_3$) | 2,62 | 70 | 67 | 61 | 56 | 55 | 55 | 11g (QSR × 4,2) |
| B (NiW/Al$_2$O$_3$) | 3,16 | 82 | 80 | 75 | 72 | 70 | 71 | 11g (QSR × 3,5) |
| C (NiCoMo/Al$_2$C$_3$) | 2,62 | 66 | 63,5 | 58,2 | 53,7 | 53 | 53 | 11g (QSR × 4,2) |
| D (CoMo/Al$_2$O$_3$) | 2,·5) | 38 | 40 | 41 | 40,5 | 40 | 41 | 11g (QSR × 4,2) |
| E (NiMo/Al$_2$O$_3$–SiO$_2$) | 3,67 | 40 | 37 | 33 | 32 | 31 | 31 | 11g (QSR × 3) |

On note pour les catalyseurs A, B, C, E une période de désactivation lente puis une stabilisation du catalyseur.

Exemple 3 (comparatif)

On répéte l'exemple 2; toutefois la sulfuration est effectuée sans effectuer de paliers: au cours de la sulfuration, on introduit une quantité totale de 11 g soufre sur le catalyseur entre 250 et 350°C. On effectue une montée régulière de la température à raison de 20°C/h. L'injection du mélange hydrogène-hydrogène sulfuré à 3% volume d'hydrogène sulfuré est commencée à 20°C et poursuivie jusqu'à ce que l'on atteigne 350°C; on continue alors l'injection à 350°C pendant 5 heures de manière à avoir introduit dans le réacteur à partir de la même charge de sulfuration, la même quantité de soufre entre 250 et 350°C, que dans l'exemple 2. La différence de procédure porte essentiellement sur la suppression des paliers à 280°C et 320°C, la température étant montée progressivement jusqu'à 350°C.

Les tests d'hydrogénation de la charge hydrocarbonée conduisent très sensiblement aux mêmes résultats que ceux obtenus dans l'exemple 2. Ceci démontre que la technique des paliers n'apporte rien lorsque l'agent de sulfuration est un simple mélange d'hydrogène sulfuré et d'hydrogène.

Exemple 4 (comparatif)

On se propose de répéter l'hydrogénation des composés aromatiques d'une coupe hydrocarbonée en effectuant au préalable une sulfuration du catalyseur à l'aide d'une charge de sulfuration ayant la composition

6

suivante:

- toluène: 20% poids
- diméthyl disulfure: 2% poids ($CH_3$-S-S-$CH_3$)
- cyclohexane: 78% poids

On injecte initialement la charge dans le réacteur à 100°C avec un débit de 2 (VVH), soit 100 cm³heure pour les 50 cm³ de catalyseur présents dans la réacteur. La pression totale est de 60 bars. De l'hydrogène est également introduit avec un débit de 350 l'litre de charge de sulfuration. On élève progressivement la température de 20°C par heure jusqu'à 350°C de façon à introduire une quantité totale de 11 g de soufre sur le catalyseur entre 250°C et la fin de la sulfuration. Les tests d'hydrogénation de la charge hydrocarbonée conduisent encore très sensiblement aux mêmes résultats que ceux obtenus dans l'exemple 2.

Exemple 5

On sulfure les catalyseurs A, B, C, D et E à l'aide de la même charge de sulfuration utilisée dans l'exemple 4. On injecte la charge dans le réacteur à 100°C:

- débit VVH = 2 (soit 100 cm³/heure pour 50 cm³ de catalyseur)
- pression totale: 60 bars, débit d'hydrogène: 350 l/litre de charge

La méthode de sulfuration apparait dans le tableau IV.

TABLEAU IV

| PROCEDURE:<br><br>Injection à 100°C<br><br>Montée de température à 25°C/h | QUANTITE DE S INJECTE DANS LE REACTEUR EN g. | QUANTITE PAR RAPPORT AU QS/R POR 50 cm³ DE CATA DE dRT = 0,7 ET FIXANT STOECHIOMETRIQUEMENT 0,075 kgS/kg CATA |
|---|---|---|
| A l'issue du<br>Palier de 1 heure à 280°C | 1,1 | 0,42 |
| Palier de 2 heures à 320°C | 2,2 | 0,84 |
| Palier de 3 heures à 350°C | 3,3 | 1,25 |
| Montées de températures inter-médiaires depuis 250° jusqu'à 350°C (4 heures) | 4,4 | 1,67 |
| Quantité totale de S injecté | 11 | 4,2 × QS/R<br>pour 1 QS/R moyen de 0,075 |

La dRT désigne la densité de remplissage dans le réacteur.

Après la sulfuration des catalyseurs, on procède comme dans les autres exemples à l'hydrogénation de la charge hydrocarbonée en injectant la dite charge à la place de la charge de sulfuration. On opère toujours dans les conditions opératoires indiquées à l'exemple 2. Les résultats obtenus sont indiqués dans le tableau V.

TABLEAU V

| CATALYSEURS | CONVERSION DU TOLUENE EN % APRES UN FONCTIONNEMENT CONTINU PENDANT: | | | | | |
|---|---|---|---|---|---|---|
| Nature | 3 h | 6 h | 12 h | 24 h | 48 h | 72 h |
| A : $NiMo/Al_2O_3$ | 74 | 70 | 66 | 63 | 61 | 61 |
| B : $NiW/Al_2O_3$ | 88 | 85 | 81 | 77 | 73 | 73 |
| C : $NiCoMo/Al_2O_3$ | 70 | 66 | 60 | 57 | 56 | 56 |
| D : $CoMo/Al_2O_3$ | 40 | 42 | 43 | 42 | 43 | 43 |
| E : $NiMo/SiO_2-Al_2O_3$ | 43 | 40 | 37 | 36 | 36 | 36 |

On constate une stabilisation sensiblement plus rapide que dans l'exemple 2 et des valeurs stabilisées plus élevées particulièrement puor les catalyseurs A ($NiMo/Al_2O_3$), B ($NiW/Al_2O_3$), C ($NiCOMo/Al_2O_3$), E ($NiMo/SiO_2Al_2O_3$), très convenables pour la catalyseur D ($CoMo/Al_2O_3$).

Exemple 6

Dans cet exemple, on se propose d'hydrogéner les oléfines contenues dans une charge hydrocarbonée et de désulfurer celle-ci.

On effectue dans cet exemple, 3 procédures de sulfuration des catalyseurs utilisés: la première procédure $P_1$ est celle décrite dans l'exemple 2 (non conforme à l'invention). La deuxième procédure $P_2$ est celle décrite dans l'exemple 5 (conforme à l'invention). La troisième procédure $P_3$ est celle décrite dans l'exemple 5 mais réalisée en utilisant à titre de charge de sulfuration une charge dont la composition pondérale est indiquée ci-dessous et quine convient pas parce qu'elle renferme des hydrocarbures oléfiniques.

– toluene: 20%

– cyclohexane: 68%

– cyclohexène: 10%

– diméthyldisulfure: 2%

Après chacune des 3 sulfurations, on réalise un test catalytique dans lequel on utilise une essence de coking déjà stabilisée par hydrogénation sélective des dioléfines et de caractéristiques suivantes:

– S = 5000 ppm

– MAV = 4 (indice d'anhydride maléïque).

– indice de brôme = 40

Les conditions opératoires sont les suivantes:

– T = 320°C

– P = 30 bars

– VVH = 4

– $H_2/HC = 600 l/l$

Les résultats obtenus après stabilisation de l'unité sont indiqués dans le tableau VI.

On utilise dans les différents tests soit un lit fixe d'un catalyseur unique, soit 2 lits fixes superposés de 2 catalyseurs distincts; dans ce cas, le lit supérieur est constitué du catalyseur indiqué dans la colonne de gauche du tableau VI, à gauche de cette colonne et le lit inférieur est constitué du catalyseur indiqué à droite de cette même colonne. La charge traverse d'abord le lit supérieur puis le lit inférieur.

TABLEAU VI

| ESSAI N° | SYSTEME CATALYTIQUE UTILISE — NATURE ET VOLUME DU CATALYSEUR CHARGE | PROCEDURE DE SULFURATION | RESULTATS DES ESSAIS- | | | | Remarques |
|---|---|---|---|---|---|---|---|
| | | | Ap. 48h de marche en continu | | Ap. 120h de marche en continue | | |
| | | | S ppm | IBr g/100g | S ppm | IBr g/100g | |
| 1 | F + A — 10 cm$^3$  40 cm$^3$ | $P_1$ | 10 | 2 | 12 | 3 | |
| 2 | F + A — 10 cm$^3$  40 cm$^3$ | $P_2$ | 4 | 1 | 5 | 1 | |
| 3 | F + A — 10 cm$^3$  40 cm$^3$ | $P_3$ | 1000 | 10 | 1000 | 10 | début de bouchage ap. 90h |
| 4 | A — 50 cm$^3$ | $P_3$ | 2500 | 10 | | | bouchage ap. 48h |
| 5 | A — 50 cm$^3$ | $P_2$ | 12 | 4 | 20 | 6 | |

En comparant les essais 1 et 2, on note que la sulfuration effectuée selon la procédure $P_1$ (essai N° 1 ) ne permet pas d'obtenir des résultats aussi bons que ceux obtenus dans l'essai N° 2 (procédure de sulfuration $P_2$). En comparant les essais N° 2 et N° 3, on note que la présence d'une quantité relativement faible d'un deuxième lit catalytique en tête du réacteur, empêche la désactivation du catalyseur du lit inférieur. On note le même effet en comparant les essais N° 3 et N° 4, essais qui de toute façon ne donnent pas de résultats satisfaisants en raison de la présence d'hydrocarbures insaturés dans la charge de sulfuration (procédure $P_3$).

Exemple 7

On se propose de réaliser l'hydrodésulfuration et l'hydrodésazotation d'un gas-oil sous vide.
On utilise une charge gas-oil sous vide soutiré de la distillation du brut "Arabe léger". Ses caractéristiques sont les suivantes:

| | distillation ASTM | % distillé en poids | température °C |
|---|---|---|---|
| S = 2,3% poids | | 5 | 391 |
| N = 0,064% | | 50 | 420 |
| d = 0,908 | | 95 | 468 |

Viscosité à 40°C: 37,8 cSt
$(37.8 \times 10^{-6}$ m2/s)

Cette charge est traitée soit en présence de 80 cm³ de catalyseur D (CoMo/Al$_2$O$_3$), soit en présence de

9

80 cm³ de catalyseur A. L'un ou l'autre de ces catalyseurs sont sulfurés de différentes façons. Pour mettre en évidence l'influence bénéfique de la présence d'aromatiques dans la charge de sulfuration, on effectue notamment une sulfuration $P_4$ effectuée comme la procédure $P_2$ mais en utilisant comme charge de sulfuration (non conforme à l'invention) le mélange constitué en poids de:

- heptane: 90%
- cyclohexane: 8%
- diméthyldisulfure: 2%

En outre, pour démontrer les possibilités de sulfuration des catalyseurs au moyen d'une charge de sulfuration du type de la charge proprement dite à traiter, éventuellement additionnée d'une composé sulfuré, on effectue 3 autres types de sulfuration (procédures $P_5$, $P_6$, $P_7$) effectuées comme pour la procédure $P_2$ en présence des charges de sulfuration suivantes:

| | | |
|---|---|---|
| $P_5$ | Gas-oil densité à 20°C = 0,864 | additionné de 2% poids de diméthyldisulfure |
| | Coupe TBP (250—370°C) Teneur en soufre = 1% poids | |
| $P_6$ | Même coupe de gas oil | additionné de 3% poids de diméthyldisulfure |
| $P_7$ | Même coupe de gas oil | additionné de 2% en poids de disulfure de carbone ($CS_2$) |

On utilise pour ces procédures $P_5$, $P_6$ et $P_7$ de sulfuration, un gas-oil léger pour pouvoir sans difficulté l'injecter à froid dans le réacteur. Le gas-oil sous vide a un point de congélation qui rend cette opération mal commode, quoique ce soit possible.

Les résultats des tests réalisés sont indiqués ci-après dans le tableau VII.

Dans ces essais la teneur en azote est mesurée par microcoulométrie. Il semble que cette méthode donne des résultats erronés et les valeurs indiquées pour l'HDN sont à cnsidérer de manière relative. Un meilleur taux d'HDN signifiant une meilleure activité du catalyseur, la valeur absolue de la conversion est probablement très inférieure à la réalité.

TABLEAU VII

| CONDITIONS OPERATOIRES : P totale = 40 bars<br>H₂/HC = 350 l/l<br>Température = 380°C<br>VVH = 2 | | | | | |
|---|---|---|---|---|---|
| NATURE DU CATALYSEUR | PROCEDURE DE SULFURATION | RESULTATS OBTENUS EN FONCTIONNEMENT CONTINU | | | |
| | | Après 40 h | | Après 120 h | |
| | | HDS % | HDN % | HDS % | HDN % |
| D (CoMo/Al₂O₃) | $P_1$ | 92,3 | 9,6 | 92,4 | 10,0 |
| A (NiMo/Al₂O₃) | $P_1$ | 88,0 | 15 | 88,0 | 14,0 |
| A (NiMo/Al₂O₃) | $P_2$ | 91,4 | 21 | 91 | 20,5 |
| A (NiMo/Al₂O₃) | $P_4$ | 87 | 13 | | |
| A (NiMo/Al₂O₃) | $P_5$ | 91,9 | 23 | 91,8 | 23 |
| A (NiMo/Al₂O₃) | $P_6$ | 91,3 | 21 | 91,2 | 21 |
| A (NiMo/Al₂O₃) | $P_7$ | 89,0 | 19 | 89 | 18,5 |

On constate une très nette amélioration des conversions quand on sulfure le catalyseur A (Ni-Mo) suivant les méthodes de l'invention $P_2$, $P_5$, $P_6$ ou $P_7$. Les performances du catalyseur A (Ni-Mo) deviennent comparables à celles du CoMo généralement préféré en HDS. Mais l'absence d'aromatiques dans la charge de sulfuration (procédure $P_4$) diminue nettement l'efficacité de l'opération.

Exemple 8

On réalise 2 essais d'hydrogénation d'une charge renfermant des paraffines en utilisant le catalyseur A (NiMo/Al₂O₃) et les procédures de sulfuration $P_1$ et $P_5$, c'est-à-dire les procédures faisant intervenir soit un mélange d'hydrogène et d'hydrogène sulfuré soit un gas-oil de distillation directe additionné de diméthyldisulfure (à 2% poids). Les conditions de fonctionnement de l'unité sont:
- P = 80 bars
- VVH = 1,5
- T = 300°C
- H₂HC = 200 en litre d'hydrogène par litre de charge.

Les caractéristiques de la charge et des produits obtenus sont indiquées ci-après dans le tableau VIII:

TABLEAU VIII

| | CHARGE | SULFURATION $H_2 + H_2S$ SELON $P_1$ | SULFURATION SELON $P_5$ GAS-OIL + DMDS |
|---|---|---|---|
| Point de fusion °F | 126 | 126 | 126 |
| Pénétration à 77°F | 15 | 16 | 16 |
| Viscosité à 210°F | 3,55 | 3,40 | 3,40 |
| Teneur en huile ASTM 721 | 0,4 | 0,4 | 0,4 |
| Couleur ASTM (D 1500) | 0,5 | | |
| Couleur Saybolt ASTM 156 | | +25 | >+30 |
| Teneur en S ppm | 230 | 6· | <5 |
| Matériaux carbonisables Codex spec <4 | >16 | 1 | <1 |

On observe une amélioration sur les qualités les plus difficiles à obtenir (couleur et matières carbonisables) quand on utilise la méthode de sulfuration suivant l'invention.

Exemple 9

On utilise le catalyseur B (NiW/Al$_2$O$_3$) qui est sulfuré suivant les 2 procédures $P_1$ et $P_5$. On se propose d'hydrogéner un kérosène: les conditions opératoires sont les suivantes:
– VVH = 1,25
– recyclage d'hydrogène = 300l/l
– température = 350°C
– pression partielle d'hydrogène = 35 bars

Les caractéristiques de la charge et des produits sont les suivants:

| | CHARGE | CATA SULFURE SELON $P_1$ | CATA SULFURE SELON $P_5$ |
|---|---|---|---|
| 10% | 77 | 76 | 76 |
| Distillation ASTM 50% | 121 | 120 | 120 |
| 90% | 177 | 176 | 176 |
| Teneur en S ppm | 2000 | 18 | 15 |
| Point de fumée | 18 | 22 | 25 |
| Teneur en aromatiques % volume FIA | 25,5 | 15 | 13 |
| On note également un meilleur résultat en sulfurant suivant les techniques préconisées | | | |

Exemple 10

On utilise le catalyseur B (NiW/Al$_2$O$_3$) qui est sulfuré suivant les 2 procédures $P_1$ et $P_5$. On se propose de

## EP 0 064 429 B2

**Revendications**

1. Procédé d'hydrotraitement d'une charge hydrocarbonée en présence d'au moins un catalyseur d'hydrotraitement renfermant (a) un support d'alumine ou de silice-alumine et (b) un couple de métaux choisi dans le groupe constitué par les couples nickel-molybdène, nickel-tungstène, cobalt-tungstène et cobal-molybdène, procédé dans lequel, préalablement à son emploi, le catalyseur d'hydrotraitement est présulfuré par une méthode de sulfuration qui consiste à disposer le catalyseur dans la zone qui sera ultérieurement utilisée comme zone d'hydrotraitement et à le traiter par une charge de sulfuration constituée par un mélange d'au moins un composé sulfuré choisi dans le groupe constitué par le sulfure de carbone, les mercaptans, les composés thiophéniques, les sulfures et les disulfures, et d'une charge hydrocarbonée, le procédé étant caractérisé en ce que la charge de sulfuration est exempte de composés insaturés oléfiniques et dioléfiniques et renferme en poids au moins 5 % d'hydrocarbures aromatiques ou de composés aromatiques, et en ce que, au cours de la sulfuration du catalyseur, on injecte la charge de sulfuration sur le catalyseur à une température initiale T comprise entre la température ordinaire et 180° C, on élève progressivement la température dans ladite zone, qui ultérieurement sera utilisée comme zone d'hydrotraitement, tout en poursuivant l'injection de la charge de sulfuration jusqu'à une température T' choisie supérieure à 250° C et inférieure à 300° C, on maintient alors, dans un premier stade, la température dans cet intervalle 250-300° C, pendant un temps suffisant pour injecter sur le catalyseur une quantité de soufre comprise entre 0,2 et 2 fois la quantité de soufre correspondant à la transformation complète en sulfures des oxydes que renferme le catalyseur (0,2 à 2 fois la valeur QS/R), on élève progressivement alors la température d'entrée dans ladite zone à une température comprise entre 300 et 340° C et supérieure de 30 à 50° C à la température T' précédemment adoptée, et on poursuit à cette nouvelle température T", l'injection de la charge de sulfuration de façon à injecter sur le catalyseur une quantité de soufre comprise entre 0,1 et 3 fois la valeur QS/R, on élève à nouveau la température de 20 à 40° C, par rapport à la température T" et à la température T''' ainsi obtenue, on poursuit l'injection de la charge de sulfuration de façon à injecter une quantité de soufre comprise entre 0,1 et 3 fois la valeur QS/R.

2. Procédé selon la revendication 1 dans lequel le composé sulfuré est le diméthyl disulfure.

3. Procédé selon la revendication 1 dans lequel on démarre le traitement de sulfuration du catalyseur en injectant la charge de sulfuration à une température voisine de 100° C.

4. Procédé selon la revendication 1 dans lequel la température T' est voisine de 280° C et la température T" est voisine de 320° C.

5. Procédé selon la revendication 1 dans lequel pendant le traitement qui se déroule à une température supérieure à 250° C et à 300° C, ladite charge de sulfuration est à l'état liquide de façon à pouvoir ruisseler sur le catalyseur.

6. Utilisation du catalyseur présulfuré selon l'une des revendications 1 à 5 pour effectuer, sur la charge d'hydrotraitement, au moins une des réactions choisie dans le groupe constitué par l'hydrogénation de composé aromatiques, l'hydrodésulfuration de composés sulfurés, l'hydrogénolyse de composés azotés et oxygénés et l'hydrotraitement de toute charge d'origine pétrolière ou issue du traitement du charbon.

**Patentansprüche**

1. Verfahren zur Wasserstoffbehandlung einer kohlenwasserstoffhaltigen Charge in Anwesenheit wenigstens eines Katalysators für die Wasserstoffbehandlung, der (a) einen Träger aus Aluminiumoxid oder Siliziumdioxidaluminiumoxid und (b) ein Metallpaar enthält, welches gewählt ist aus der Gruppe, die besteht aus den Paaren Nickel-Molybdän, Nickel-Wolfram, Kobalt-Wolfram und Kobalt-Molybdän, wobei vor der Anwendung des Verfahrens der Wasserstoffbehandlungskatalysator vorsulphuriert wird nach einem Sulphurierungsverfahren, das darin besteht, den Katalysator in einer Zone anzuordnen, die später als Wasserstoffbehandlungszone verwendet wird, um ihn mit einer Sulphurierungscharge zu behandeln, die gebildet wird durch ein Gemisch wenigstens einer Schwefelverbindung (die aus der Gruppe, die besteht aus Schwefelkohlenstoff, den Merkaptanen, den Thiophenverbindungen, den Sulphiden und Disulphiden, gewählt ist) und einer Kohlenwasserstoffcharge, dadurch gekennzeichnet, daß die Sulphurierungscharge frei von ungesättigten olefinischen und diolefinischen Verbindungen ist und enthält weinigstens 5 Gew.- % aromatische Kohlenwasserstoffe oder aromatische Verbindungen enthält u. daß während der Sulphurierung des Katalysators die Sulphurierungscharge auf den Katalysator bei einer Anfangstemperatur T zwischen Umgebungstemperatur und 180°C gegeben wird, daß allmählich die Temperatur in dieser Zone, die schließlich als Wasserstoffbehandlungszone verwendet wird, erhöht wird, indem die Zugabe der Sulphurierungscharge bis zu einer Temperatur T' forgesetzt wird, die über 250°C und unter 300°C gewählt ist und daß man dann in einer ersten Stufe die Temperatur in diesem Intervall von 250-300°C über einen ausreichenden Zeitraum hält, um auf den Katalysator eine Schwefelmenge zwischen

14

raffiner un mélange d'hydrocarbures dérivés du triatement d'un charbon en diminuant le teneur en hétéro atomes: soufre, azote, oxygène et en diminuant le poids moléculaire.

La charge à traiter répond aux analyses caractéristiques suivants:

$$d_4^{20} = 0,99$$

| Distillation TBP | % volume | °C |
|---|---|---|
| | 5 | 202 |
| | 10 | 210 |
| | 50 | 266 |
| | 90 | 360 |
| | 95 | 388 |

| Analyse élémentaire | |
|---|---|
| C = 85,24% | |
| H = 9 % | |
| N = 0,8 % | |
| S = 0,4 % | |
| O = 4,56 % | |

Les conditions opératoires utilisées sont les suivantes:
- Pression partielle d'hydrogène = 120 bars
- $H_2$/HC = 400l/l
- VVH = 0,5 m³/m³/h
- T = 370°C

Les résultats obtenus sont indiqués dans le tableau IX:

TABLEAU IX

| | CATALYSEUR SULFURE SUIVANT $P_1$ | CATALYSEUR SULFURE SUIVANT $P_2$ |
|---|---|---|
| ANALYSE ELEMENTAIRE DE L'EFFLUENT (en % poids) | | |
| C | 87,0 | 86,5 |
| H | 12,5 | 13,5 |
| S | 0,015 | 0,01 |
| N | 0,22 | 0,10 |
| O | 0,20 | 0,13 |

dem 0,2 und 2-fachen der Schwefelmenge entsprechend der voll-ständigen Umformung der Oxide, die der Katalysator enthält (0,2 bis 2-fach der Wert QS/R), in Sulphide zu geben ; dann allmählich die Eintrittstemperature in diese Zone auf einem Wert zwischen 300 und 340°C und um 30 bis 50°C oberhalb der vorher erreichten Temperatur T' erhöht ; und bei dieser neuen Temperatur T" das Einführen der Sulphurierungscharge derart fortsetzt, daß man auf den Katalysator eine Schwefelmenge zwischen dem 0,1 bis 3-fachen des Wertes QS/R gibt, man erneut die Temperatur um 20 bis 40°C gegenüber der Temperatur T" erhöht und man bei der so erhaltenen Temperatur T"' das Einführen der Sulphurierungscharge derart fortsetzt, daß eine Schwefelmenge zwischen dem 0,1 bis 3-fachen des Wertes QS/R eigeführt wird.

2. Verfahren nach Anspruch 1, dadurch gekennzeichnet, daß die sulphuriete Verbindung Dimethyldisulphid ist.

3. Verfahren nach Anspruch 1, dadurch gekennzeichnet, daß man die Sulphurierungsbehandlung des Katalysators anlaufen läßt, indem man die Sulphurierungscharge bei einer Temperatur benachbart 100°C zugibt.

4. Verfahren nach Anspruch 1, dadurch gekennzeichnet, daß die Temperatur T' benachbart 280°C und die Temperatur T" benachbart 320°C liegt.

5. Verfahren nach Anspruch 1, dadurch gekennzeichnet, da während der Behandlung, die bei einer Temperatur oberhalb 250°C und 300°C abläuft, die Sulphurierungscharge sich im Müssigen Zustand befindet, derart, daß sie über den Katalysator rieseln kann.

6. Anwendung des vorsulphurierten Katalysators nach einem der Ansprüche 1 bis 5, um an der Kohlenwasserstoffbehandlungscharge wenigstens eine der Reaktionen durchzuführen die gewählt ist aus der Gruppe bestehend aus der Hydrierung aromatischer Verbindungen, der Hydrodesulphurierung sulphurierter Verbindungen, der Hydrogenolyse stickstoffhaltiger und wasserstoffhaltiger Verbindungen sowie der Hydrobehandlung jeder aus Erdöl stammender oder auf einer Behandlung der Kohle beruhender Charge.

## Claims

1. A process for the hydrotreatment of a hydrocarbon charge in the presence of at least one hydrotreatment catalyst containing :
    a) an alumina or silica-alumina carrier, and
    b) a pair of metals selected from the group consisting of nickel-molybdenum, nickel-tungsten, cobalt-tungsten and cobalt-molybdenum pairs, process wherein, before being used, the hydrotreatment catalyst is presulfided by a sulfiding method consisting of placing the catalyst in the zone which will be subsequently used as hydrotreatment zone and to treat it with a sulfiding charge consisting of a mixture of at least one sulfur compound selected from the group consisting of carbon sulfide, mercaptans, thiophenic compounds, sulfides and disulfides, and a hydrocarbon charge, the process being characterized in that the sulfiding charge is free of olefinic and diolefinic unsaturated compounds and containing by weight at least 5 % of hydrocarbons of aromatic compounds, and in that during the sulfiding of the catalyst, the sulfiding charge is injected on the catalyst at an initial temperature between the ordinary temperature and 180° C, the temperature is progressively increased in said zone, which subsequently will be used as hydrotreatment zone, while simultaneously continuing the injection of the sulfiding charge until a temperature selected higher than 250° C and lower than 300° C is reached, and in that, in a first stage, the temperature is then maintained within said range 250° C - 300° C for a sufficient time to introduce on the catalyst a sulfur amount 0.2 to 2 times the sulfur amount corresponding to the complete conversion to sulfides of the oxides contained in the catalyst (0.2 to 2 times the value QS/R), in that the inlet temperature to said zone is then progressively increased to a temperature from 300 to 340° C, and from 30 to 50° C higher than the precedingly selected temperature T', and the introduction of the sulfiding charge is continued at said new temperature T" so as to introduce on the catalyst a sulfur amount from 0.1 to 3 times the value QS/R, and the temperature is raised again by 20 to 40° C above temperature T" and in that the introduction of the sulfiding charge is continued at the resulting temperature T"' so as to introduce a sulfur amount from 0.1 to 3 times the value QS/R.

2. A process according to claim 1, wherein the sulfur compound is dimethyl disulfide.

3. A process according to claim 1, wherein the sulfiding treatment of the catalyst is initiated by introducing the sulfiding charge at a temperature close to 100° C.

4. A process according to claim 1, wherein the temperature T' is close to 280° C and the temperature T" is close to 320° C.

5. A process according to claim 1, wherein, during the treatment which takes place at a temperature higher than 250° C and at 300° C, the said sulfiding charge is in the liquid state, so that it can trickle over the catalyst.

6. The use of the presulfided catalyst according to any of claims 1 to 5 for effecting, on a hydrotreatment charge, at least one of the reactions selected from the group consisting of the hydrogenation of aromatic compounds, the hydrodesulfurization of sulfur-containing compounds, the hydrogenolysis of nitrogen- and oxygen-containing compounds and the hydrotreatment of any charge of petroleum origin or issued from the coal treatment.